# EUROPEAN PATENT SPECIFICATION

(11) **EP 3 328 218 B1**
(45) Date of publication and mention of the grant of the patent: **19.12.2018**
(21) Application number: 16733541.3
(22) Date of filing: 30.06.2016
(51) Int. Cl.: A23L 29/00, A23P 10/20, A23L 29/262, A23L 23/10

(54) **SAVOURY CONCENTRATE COMPRISING INORGANIC SALT, FAT AND CARBOXYMETHYL CELLULOSE**
WOHLSCHMECKENDES KONZENTRAT MIT ANORGANISCHEM SALZ, FETT UND CARBOXYMETHYLCELLULOSE
CONCENTRÉ SAVOUREUX COMPRENANT UN SEL INORGANIQUE, DE LA MATIÈRE GRASSE ET LA CARBOXYMÉTHYL CELLULOSE

(30) Priority: 31.07.2015 EP 15179331
(43) Date of publication of application: 06.06.2018
(73) Proprietor: Unilever NV, 3013 AL Rotterdam (NL); Unilever PLC, London Greater London EC4P 4BQ (GB)
(72) Inventor: BLIJDENSTEIN, Theodorus, Berend, Jan, 3133 AT Vlaardingen (NL); MELLEMA, Michel, 3133 AT Vlaardingen (NL); OLIVEIRA, Marcelo, Camilo De, 74074 Heilbronn (DE); ORTEGA GALINDO, Martha, C.P. 52000 Lerma-Estado de Mexico (MX)
(74) Representative: Tjon, Hon Kong Guno
(86) International application number: PCT/EP2016/065234
(87) International publication number: WO 2017/021070

(56) References cited:
- US-A- 4 380 655
- DATABASE GNPD [Online] MINTEL; November 2012 (2012-11), Anonymous: "Chicken & Salt Soup Cubes", XP002747943, Database accession no. 1922345

## Description

### TECHNICAL FIELD OF THE INVENTION

The present invention relates to a savoury concentrate, more particularly a savoury concentrate that can be used in the preparation of broths, bouillons, soups, sauces, gravies etc. to improve taste as well as appearance and texture. The savoury concentrate can be provided in the form of, for instance, cubes, pellets or granulates.

The savoury concentrate of the present invention contains:
a) 22-85 wt.% inorganic salt;
b) 2-60 wt.% fat;
c) 1.8-12 wt.% of carboxymethyl cellulose; and
d) 0-25 wt.% of glutamate component selected from glutamic acid, edible glutamate salts and combinations thereof;e) 0-25 w.% starch component selected from native starch, pregelatinised starch, maltodextrin, modified starch and combinations thereof;f) 0-20 wt.% of sugar selected from monosaccharides, disaccharides and combinations thereof;g) 0-45 wt.% of vegetable matter selected from vegetables, herbs, spices and combinations thereof;h) 0-10 wt.% water; wherein the components a) to e) together constitute at least 55 wt.% of the savoury concentrate and wherein the components a) to h) together constitute at least 75 wt.% of the savoury concentrate.

The present invention also provides a process of preparing a savoury concentrate, said process comprising:
- providing a savoury concentrate mixture containing 22-85 wt.% inorganic salt; 2-60 wt. % fat; 1.8-12 wt.% of carboxymethyl cellulose and optionally further components; and
- converting the savoury concentrate mixture into shaped articles or granules.

### BACKGROUND OF THE INVENTION

The use of bouillon cubes to provide taste in soups, gravies, sauces and other similar food products is well known. Bouillon cubes typically contain salt, sugar, fat, binders, herbs, spices, taste enhancer (e.g. glutamate) and flavouring.

WO 2007/085609 describes a bouillon and/or seasoning tablet and/or cube, which comprises, in total % in weight, 0.5-10 % oil, and/or 0-5 % fat, binders, salt, between 1 and 5 % of total water, as well as between 0.5 and 8 % of cereal, vegetable and/or fruit fibers, as well as optionally sugar, spices, flavors, taste enhancers, dehydrated vegetables, herb leaves and/or plant extracts. The binders are taken from the group consisting of dextrose syrup, maltodextrin, citric acid, meat extract and processed flavors.

US 4,380,655 relates to sulfur-containing flavoring agents. Example 4 describes an instant beef gravy powder that contains salt, fat and carboxymethyl cellulose.

### SUMMARY OF THE INVENTION

The inventors have developed a savoury concentrate, such as a bouillon cube, that can suitably be used in the preparation of bouillon, broth, soup, sauce or gravy, and that not only imparts taste and taste enhancement, but that additionally improves texture of the final product.

The savoury concentrate of the present invention contains:
a) 22-85 wt.% inorganic salt;
b) 2-60 wt.% fat;
c) 1.8-12 wt.% of carboxymethyl cellulose;
d) 0-25 wt.% of glutamate component selected from glutamic acid, edible glutamate salts and combinations thereof;
e) 0-25 w.% starch component selected from native starch, pregelatinised starch, maltodextrin, modified starch and combinations thereof;
f) 0-20 wt.% of sugar selected from monosaccharides, disaccharides and combinations thereof;
g) 0-45 wt.% of vegetable matter selected from vegetables, herbs, spices and combinations thereof;
h) 0-10 wt.% water;
wherein the components a) to e) together constitute at least 55 wt.% of the savoury concentrate and wherein the components a) to h) together constitute at least 75 wt.% of the savoury concentrate.

When used in the preparation of aqueous dishes, the savoury concentrate of the present invention offers the advantage that it imparts a velvety mouthfeel (mouth coating) that is highly appreciated and associated with homemade preparations.

The aforementioned benefits are clearly perceptible even if the savoury concentrate is applied in relatively small quantities in bouillon, broth, soup, sauce or gravy.

The invention also provides a process of preparing a savoury concentrate, said process comprising:
- providing a savoury concentrate mixture containing:
   ∘ 22-85 wt.% inorganic salt;
   ∘ 2-60 wt.% fat;
   ∘ 1.8-12 wt.% of carboxymethyl cellulose;
   ∘ optional further components; and
- converting the savoury concentrate mixture into shaped articles or granules.

### DETAILED DESCRIPTION OF THE INVENTION

A first aspect of the invention relates to a savoury concentrate comprising:
a) 22-85 wt.% inorganic salt
b) 2-60 wt.% fat;
c) 1.8-12 wt.% of carboxymethyl cellulose;
d) 0-25 wt.% of glutamate component selected from glutamic acid, edible glutamate salts and combinations thereof;
e) 0-25 w.% starch component selected from native starch, pregelatinised starch, maltodextrin, modified starch and combinations thereof;
f) 0-20 wt.% of sugar selected from monosaccharides, disaccharides and combinations thereof;
g) 0-45 wt.% of vegetable matter selected from vegetables, herbs, spices and combinations thereof;
h) 0-10 wt.% water;
wherein the components a) to e) together constitute at least 55 wt.%, preferably at least 65 wt.% and more preferably at least 75 wt.% of the savoury concentrate; and wherein the components a) to h) together constitute at least 75 wt.%, preferably at least 85 wt.%, more preferably at least 90 wt.% of the savoury concentrate.

The term "fat" as used herein refers to glycerides selected from triglycerides, diglycerides, monoglycerides, phosphoglycerides and combinations thereof. The term "fat" encompasses fats that are liquid at ambient temperature as well as fats that are solid or semi-solid at ambient temperature.

Carboxymethyl cellulose is cellulose ether. The term "cellulose ether" as used herein refer to a cellulose derivative that can be produced by first preparing an alkali cellulose and then subjecting said alkali cellulose to alkylation and/or alkoxylation. Cellulose is a linear polymer of D-glucose monomers joined by D-β(1-4)linkages and arranged in repeating units of cellobiose, each comprising two anhydroglucoses.

The degree of substitution (DS) of a given cellulose ether is defined as the average number of substituted hydroxyl groups per glucose. The theoretical maximum is thus a DS of 3.0.

The degree of polymerization, or DP, as used herein in relation to cellulose ether refers to the number of cellobiose units in the cellulose ether.

The solid fat content at 20°C (N₂₀) can suitably be determined using ISO 8292-1 (2012) - Determination of solid fat content by pulsed NMR.

The mass weighted mean diameter of a savoury concentrate in granulated form and of particulate components of the savoury concentrate may suitably be determined using a set of sieves with different mesh sizes in case at least 80 wt.% of the material has a diameter of more than 100 µm. In case the material is a very fine powder, i.e. a powder comprising more than 20 wt.% particles with a diameter of less than 100 µm, the mass weighted mean diameter may suitably be determined by means of microscopy. The mass weighted average diameter of starch granules, for instance, can be determined from microscopic images from separate areas, each showing at least 200 starch granules. Three images are used to measure starch granules sizes. The starch granules are labelled manually, and the sizes are automatically measured in micrometers by suitable image analysis software. Further details can be found in Snyder,EM. (1984) (Snyder,EM. (1984). Chapter XXII - Industrial microscopy of starches. In: Starch: Chemistry and Technology (Second Edition) Food Science and Technology, ed. R.L.W.PASCHALL San Diego: Academic Press, 661-673).

The savoury concentrate of the present invention typically comprises 30-70 wt.%, preferably 40-60 wt.% inorganic salt.

The fat content of the savoury concentrate typically is in the range of 3-35 wt.%, more preferably in the range of 5-30 wt.% fat. The fat contained in the savoury concentrate preferably has a solid fat content at 20°C (N20) of at least 5%, more preferably at least 10%.

The carboxymethyl cellulose is preferably applied in the savoury concentrate in a concentration of 3-11 wt.%, more preferably in a concentration of 3.5-10.5 wt.%, even more preferably in a concentration of 4-10 wt.%.

The savoury concentrate advantageously contains at least 1 wt.% of the glutamate component. More preferably, the savoury concentrate contains 2-20 wt.% of the glutamate component.

The savoury concentrate of the present invention can take the form of, for instance, a granulate a shaped article or a paste. Preferably, the savoury concentrate is a granulate or a shaped article.

In accordance with a particularly preferred embodiment of the invention, the concentrate is a shaped article having a weight of 2-50 g, said shaped article comprising the following components:
a) 35-70 wt.%, preferably 40-60 wt.% inorganic salt;
b) 5-30 wt.%, preferably 15-25 wt.% fat, said fat having a solid fat content at 20°C (N₂₀) of at least 5%;
d) 0-20 wt.%, preferably 2-18 wt.% of the glutamate component.

The shaped article preferably has a weight in the range of 2.5-30 g, more preferably in the range of 3.0-28 g and most preferably of 3.2-24 g.

The shaped concentrate article can suitably be provided in different forms. Preferably, the article is provided in the form of a cuboid, more preferably in the form of a rectangular cuboid and most preferably in the form of a cube.

The fat contained in the shaped article preferably has a N₂₀ of at least 10%, more preferably of 25-95% and most preferably of 50-90%.

In one preferred embodiment, the savoury concentrate is a granulate having a mass weighted average diameter in the range of 0.1-5 mm, said granulate comprising the following components:
a) 35-85 wt.%, preferably 40-75 wt.% inorganic salt;
b) 3-20 wt.%, preferably 4-15 wt.% fat;
d) 2-20 wt.%, preferably 5-15 wt.% of the glutamate component.

The granulate preferably has a mass weighted average diameter in the range of 0.2-2 mm, most preferably in the range of 0.25-1.5 mm.

The fat contained in the granulate preferably has a N₂₀ of 0-60%, more preferably of 5-40% and most preferably of 10-30%.

The savoury concentrate typically contains less than 9 wt.% water. More preferably, the concentrate contains 1-8 wt.% water. Most preferably, the concentrate contains 2-7 wt.% water.

Unlike the savoury concentrate described in WO 20114/095196, the savoury concentrate of the present invention preferably does not comprise pores containing hydrocolloid attached to the wall of the pores.

The inorganic salt employed in the savoury concentrate is preferably selected from sodium chloride, potassium chloride and combinations thereof. Most preferably, the inorganic salt is sodium chloride.

The inorganic salt employed in the savoury concentrate typically has a mass weighted mean diameter in the range of 5-150 µm, more preferably of 10-100 µm.

The fat employed in the savoury concentrate preferably is a vegetable fat. The term "vegetable fat" encompasses vegetable fats that have been fractionated and/or hydrogenated. Examples of vegetable fats that may suitably be used in the savoury concentrate include palm oil, palm kernel oil, coconut oil, sunflower oil, soybean oil, rapeseed oil, linseed oil, cottonseed oil, maize oil, olive oil and combinations thereof.

Besides the inorganic salt, the fat and the carboxymethyl cellulose, the savoury concentrate may suitably contain additional ingredients, such as starch components, taste enhancers (glutamate, yeast extract, yeast autolysate, hydrolysed vegetable protein), sugars, vegetable matter, gelatine, binders, emulsifiers (e.g. lecithin and/or monoglycerides), flavouring, colouring, minerals and vitamins.

The savoury concentrate preferably contains a starch component selected from native starch, pregelatinised starch, maltodextrin, modified starch and combinations thereof. The starch component is preferably present in the savoury concentrate in a concentration of 3-20 wt.%, more preferably of 4-18 wt.% and most preferably of 5-15 wt.%.

The combination of starch component and carboxymethyl cellulose is preferably present in the savoury concentrate in a concentration of 8-32 wt.%, more preferably of 15-28 wt.% and most preferably of 18-25 wt.%.

Best results are obtained with savoury concentrate of the present invention if the starch component and the carboxymethyl cellulose are present in a weight ratio of 1:2 to 12:1. Even more preferably, the latter weight ratio is in the range of 2:3 to 5:1, most preferably in the range of 1:1 to 3:1

The starch component employed in accordance with the present invention is preferably selected from native starch, maltodextrin, pregelatinised starch and combinations thereof. Even more preferably, the starch is selected from native starch, pregelatinised starch and combinations thereof. Most preferably, the starch component is native starch.

The starch component employed in the savoury concentrate typically has a mass weighted mean diameter in the range of 5-200 µm, more preferably of 10-100 µm, most preferably of 12-60 µm.

According to a particularly preferred embodiment, the carboxymethyl cellulose employed in accordance with the present invention has a molecular weight of at least 50,000 g/mol, more preferably of at least 80,000 g/mol and most preferably of at least 100,000 g/mol. Here the molecular weight refers to molecular weight of individual polysaccharide molecules and not to a (number or weight) average molecular weight.

The carboxymethyl cellulose typically has a number average degree of polymerisation of at least 200, more preferably of at least 300 and most preferably of 500 to 10,000.

The carboxymethyl cellulose employed in the savoury concentrate preferably has a low degree of substitution of not more than 2.5. More preferably, the carboxymethyl cellulose has a degree of substitution of not more than 2.2, even more preferably of not more than 2.0. The aforementioned degree of substitution preferably is at least 1.2, more preferably at least 1.4 and most preferably at least 1.6.

The carboxymethyl cellulose is preferably applied in the savoury concentrate in the form of a powder. The particles of this powder typically contain more than 60 wt.%, more preferably at least 80 wt.% and most preferably at least 90 wt.% of the carboxymethyl cellulose. The carboxymethyl cellulose is preferably applied in the form of a powder having a relatively high mass weighted mean diameter in the range of 100-700 µm, more preferably of 120-600 µm and most preferably of 150-500 µm.

The savoury concentrate may suitably comprise 0-12 wt.%, more preferably 1-10 wt.% and most preferably 2-8 wt.% of sugar. Preferably, the sugar is selected from sucrose, glucose, fructose, lactose and combinations thereof.

In accordance with another preferred embodiment, the savoury concentrate contains 0-30 wt.% of vegetable matter selected from vegetables, herbs, spices and combinations thereof. More preferably, said vegetable matter is contained in the savoury concentrate in a concentration of 0-20%, most preferably 1-10% by weight of the savoury concentrate.

Examples of sources of vegetable matter include parsley, dill, basil, chives, sage, rosemary, thyme, oregano, leek, onion, mushrooms, broccoli, cauliflower, tomato, courgette, asparagus, bell pepper, egg plant, cucumber, carrot and coconut flesh. The vegetable matter may be applied in the form of leafs, slices, florets, dices or other pieces.

According to another preferred embodiment, the savoury concentrate contains 0-10 wt.%, more preferably 0.5-8 wt.% and most preferably 1-5 wt.% of gelatine component, said gelatine component being selected from gelatine, hydrolysed gelatine and combinations thereof.

The savoury concentrate of the present invention preferably is a packaged savoury concentrate. The portion of the concentrate as packaged preferably has a weight (excluding packaging) of 1 g to 1 kg, preferably 2-250 g, more preferably 5-50 g. The packaging can be e.g. a container, a pouch or a wrapper.

A further aspect of the invention relates to a method of preparing a savoury product selected from a broth, a bouillon, a soup, a sauce or a gravy, said method comprising the addition of the savoury concentrate. According to a particularly preferred embodiment said method comprises the addition of the savoury concentrate to a hot aqueous liquid having a temperature in excess of 60°C, more preferably in excess of 80°C.

Typically, the present method of preparing a savoury product comprises addition of the savoury concentrate in a concentration of at least 0.5% by weight of the savoury product. More preferably, the savoury concentrate is added in a concentration of 0.8-5%, most preferably of 1-3% by weight of the savoury product.

Yet another aspect of the invention relates to a process of preparing a savoury concentrate, said process comprising:
- providing a savoury concentrate mixture containing:
   ∘ 22-85 wt.% inorganic salt;
   ∘ 2-60 wt.% fat;
   ∘ 1.8-12 wt.% of carboxymethyl cellulose;
   o optional further components; and
- converting the savoury concentrate mixture into shaped articles or granules.

The aforementioned process may suitably be employed to produce a savoury concentrate as described herein before.

The savoury concentrate mixture employed in the present process preferably has the same composition as the savoury concentrate described herein before.

The carboxymethyl cellulose employed in the present process preferably is a carboxymethyl cellulose as defined herein before.

According to a particularly preferred embodiment, the present process comprises incorporating into the savoury concentrate mixture the carboxymethyl cellulose in the form of a powder having a mass weighted average diameter of 100-700 µm, more preferably of 120-600 µm and most preferably of 150-500 µm.

The preparation of the savoury concentrate mixture preferably comprises addition of a small quantity of water in the form of an aqueous liquid. Typically, the savoury concentrate mixture is prepared by adding 0.5-10%, more preferably 0.8-5% and most preferably 1-3% of aqueous liquid by weight of the savoury concentrate mixture. The aqueous liquid employed typically contains at least 50 wt.%, more preferably at least 70 wt.% water.

The savoury concentrate mixture may suitably be converted into shaped articles or granules by means of compression. The compressing of the savoury concentrate mixture can be done using equipment known in the art. Examples of known techniques that can be used to form the granules and/or shaped articles include tabletting, roller compacting, extrusion, pelletising, etc.

The invention is further illustrated by the following non-limiting examples.

### EXAMPLES

### Example 1 (not within the scope claimed)

Powder bouillons were prepared on the basis of the recipe (in wt.%) shown in Table 1.

**Table 1**

| | Wt.% | |
|---|---|---|
| Ingredients | 1 | A |
| Sodium chloride | 48.46 | 48.46 |
| Fat¹ | 7.99 | 7.99 |
| Corn starch | 7.83 | 9.17 |
| Monosodium glutamate | 7.99 | 7.99 |
| Carboxymethyl cellulose | 1.34 | 0.00 |
| Sugar | 9.99 | 9.99 |
| Water | 0.34 | 0.34 |
| Vegetable material² | 11.25 | 11.25 |
| Anticaking | 0.9 | 0.9 |
| Colorants | 0.04 | 0.04 |
| Flavouring | 3.9 | 3.9 |

| | | |
|---|---|---|
| ¹ N₂₀ = 5% ² Contains hydrolysed vegetable protein, garlic, onion, pepper, parsley. | | |

The powder bouillon was prepared using the following procedure:
- part of sodium chloride, monosodium glutamate, melted fat, water and colorants are introduced into a mixer and mixed for 120 seconds (choppers off).
- remaining salt, sugar, corn starch, flavouring and vegetable material are added, except for the parsley flakes, and mixed for 90 seconds (choppers on);
- finally, carboxymethyl cellulose is added together with parsley flakes and anticaking and mixed for 60 seconds, choppers off.

### Example 2

Meat ball dishes were prepared on the basis of the recipe shown in Table 2, using the powder bouillons described in Example 1 (powder bouillon 1 and powder bouillon A).

**Table 2**

| Ingredients | |
|---|---|
| Ground beef | 500g |
| Bread flour | 15 g |
| Egg | 1 |
| Chopped onions | 40 g |
| Chopped garlic | 3 g |
| Chopped tomato | 230g |
| Water | 360 mL |
| Bay | 2 leaves |
| Oil | 30 mL |
| Chicken Powder bouillon | 2 sachets of 12g |

The dishes were prepared as follows:
- mix the ground beef, the bread flour, the egg and 1 sachet of the powder bouillon;
- use the mixture to prepare 8 - 10 meat balls;
- to prepare the sauce, add the tomatoes, onions, garlic and water in a blender and mix for 30 seconds;
- in a pan, add oil and heat it. Add the sauce and simmer for 2 minutes;
- add 1 sachet of the powder bouillon;
- add the meat balls to the sauce and bring to boil for 14 minutes using medium heating. In the last two minutes, add the bay leaves

The meat ball dishes thus prepared were evaluated by an expert panel. The panel evaluation shows that the dish prepared with powder bouillon 1 had a more appealing taste and texture than the dish prepared with powder bouillon A.

### Example 3

Bouillons were prepared from bouillon powders containing different levels of added carboxymethyl cellulose (CMC), including a control sample without added CMC, and were evaluated by a trained QDA panel.

The composition of the bouillon powder used is shown in Table 3.

**Table 3**

| | Wt.% |
|---|---|
| Palm stearin (IV36) | 16 |
| Potato starch (native) | 11 |
| Sugar | 2 |
| Glutamate | 15 |
| Vegetables, chicken base, herbs, flavouring | 16 |
| Salt | 40 |

CMC-containing bouillon powders were prepared by adding CMC (Aqualon™ 9M31XF, 99.5% pure, MW 250,000 g/mol, degree of polymerization = 1100, degree of substitution = 0.8-0.95) to the aforementioned bouillon powder in the concentrations indicated in Table 4.

**Table 4**

| Sample | CMC added (% by weight of bouillon powder) |
|---|---|
| 1 | 4 |
| 2 | 10 |

Bouillons containing the same amount of bouillon powder (20 g/l) and different levels of CMC were prepared by mixing the powders into boiling water, followed by boiling under stirring for 3 more minutes.

The hot bouillons were served in 150 ml quantities in preheated china soup bowls to 14 members of a QDA panel that had previously been trained to describe the sensory characteristics of bouillons using a set of sensory descriptors. These descriptors included attributes related to appearance, odour, mouthfeel, taste, aftertaste and afterfeel. The individual attributes were scored on a scale of 0 to 15, a high score indicating that the attribute is very noticeable.

The products were offered to the panellists sequentially with intervals of 5 minutes, and were identified by a 3-digit code. Tap water and cream crackers were used by the panellists as a palate cleanser.

A mean score was calculated for each of the sensory attributes that were used to by each panellist describe the bouillons. Within the large set of sensory attributes that the QDA panel used to describe the tested samples, statistically significant differences were observed for the sensory attributes shown in Table 5. The letters between parentheses indicate whether or not differences between scores are statistically significant. In case there is an overlap, e.g. (a) and (ab), the difference scores is not statistically relevant (at p<0.05). In case there is no overlap, e.g. (a) vs. (b), the difference in scores is statistically relevant (at p<0.05).

**Table 5**

| | **Control** | **CMC 4%** | **CMC 10%** |
|---|---|---|---|
| Slithery/jelly mouthfeel¹ | 1.3 (b) | 1.8 (b) | 2.8 (a) |
| Fatty mouthfeel² | 3.2 (b) | 3.8 (a) | 3.7 (a) |

| | | | |
|---|---|---|---|
| ¹ degree of slithery feeling in the mouth ² degree of fatty feeling in the mouth | | | |

### Comparative Example

Bouillons were prepared from a bouillon powder containing added gelatin and from a control sample without added gelatin, and evaluated by a QDA panel. The procedure followed was the same as in Example 3. The amount of gelatin added was 75% by weight of bouillon powder.

Despite the very high level of gelatin addition, the QDA panel did not detect statistically significant differences for any of the mouthfeel attributes.

## Claims

1. A savoury concentrate comprising the following components:
a) 22-85 wt.% inorganic salt;
b) 2-60 wt.% fat;
c) 1.8-12 wt.% of carboxymethyl cellulose;
d) 0-25 wt.% of glutamate component selected from glutamic acid, edible glutamate salts and combinations thereof;
e) 0-25 w.% starch component selected from native starch, pregelatinised starch, maltodextrin, modified starch and combinations thereof;
f) 0-20 wt.% of sugar selected from monosaccharides, disaccharides and combinations thereof;
g) 0-45 wt.% of vegetable matter selected from vegetables, herbs, spices and combinations thereof;
h) 0-10 wt.% water;
wherein the components a) to e) together constitute at least 55 wt.% of the savoury concentrate and wherein the components a) to h) together constitute at least 75 wt.% of the savoury concentrate.

2. Savoury concentrate according to claim 1, wherein the concentrate is a granulate or a shaped article.

3. Savoury concentrate according to claim 2, wherein the concentrate is a shaped article having a weight of 2-50 g, said shaped article comprising the following components:
a) 35-70 wt.% inorganic salt;
b) 5-60 wt.% fat, said fat having a solid fat content at 20°C (N₂₀) of at least 5%;
d) 0-20 wt.% of the glutamate component.

4. Savoury concentrate according to claim 2, wherein the concentrate is a granulate having a mass weighted average diameter in the range of 0.1-5 mm, said granulate comprising the following components:
a) 35-85 wt.% inorganic salt;
b) 3-20 wt.% fat;
d) 2-20 wt.% of the glutamate component.

5. Savoury concentrate according to any one of the preceding claims, wherein the inorganic salt is selected from sodium chloride, potassium chloride and combinations thereof.

6. Savoury concentrate according to any one of the preceding claims, wherein the savoury concentrate contains 3-20 wt.% of the starch component.

7. Savoury concentrate according to any one of the preceding claims, wherein the concentrate contain 3-11 wt.% of the carboxymethyl cellulose.

8. Savoury concentrate according to any one of the preceding claims, wherein the carboxymethyl cellulose has a molecular weight of at least 50,000 g/mol.

9. Savoury concentrate according to any one of the preceding claims, wherein the carboxymethyl cellulose has a degree of substitution of not more than 1.4.

10. A method of preparing a savoury product selected from a broth, a bouillon, a soup, a sauce or a gravy, said method comprising the addition of a savoury concentrate according to any one of the preceding claims.

11. A process of preparing a savoury concentrate, said process comprising:
• providing a savoury concentrate mixture containing:
∘ 22-85 wt.% inorganic salt;
∘ 2-60 wt.% fat;
∘ 1.8-12 wt.% of carboxymethyl cellulose;
∘ optional further components; and
• converting the savoury concentrate mixture into shaped articles or granules.

12. Process according to claim 11, wherein the process comprises compressing the savoury concentrate mixture into shaped articles or granules.

13. Process according to claim 11 or 12, wherein the process comprising incorporating the carboxymethyl cellulose in the form of a powder having a mass weighted average diameter of 100-700 µm.

14. Process according to any one of claims 11-13, wherein the process yields a savoury concentrate according to any one of claims 1-9.

## Patentansprüche

1. Wohlschmeckendes Konzentrat, umfassend die folgenden Bestandteile:
a) 22-85 Gew.-% anorganisches Salz;
b) 2-60 Gew.-% Fett;
c) 1,8-12 Gew.-% Carboxymethylcellulose;
d) 0-25 Gew.-% Glutamat-Bestandteil, ausgewählt aus Glutaminsäure, essbaren Glutamatsalzen und Kombinationen davon;
e) 0-25 Gew.-% Stärke-Bestandteil, ausgewählt aus nativer Stärke, vorgelatinierter Stärke, Maltodextrin, modifizierter Stärke und Kombinationen davon;
f) 0-20 Gew.-% Zucker, ausgewählt aus Monosacchariden, Disacchariden und Kombinationen davon;
g) 0-45 Gew.-% pflanzliches Material, ausgewählt aus Gemüse, Kräutern, Gewürzen und Kombinationen davon;
h) 0-10 Gew.-% Wasser;
wobei die Bestandteile a) bis e) zusammen mindestens 55 Gew.-% des wohlschmeckenden Konzentrats ausmachen und wobei die Bestandteile a) bis h) zusammen mindestens 75 Gew.-% des wohlschmeckenden Konzentrats ausmachen.

2. Wohlschmeckendes Konzentrat nach Anspruch 1, wobei das Konzentrat ein Granulat oder ein geformter Gegenstand ist.

3. Wohlschmeckendes Konzentrat nach Anspruch 2, wobei das Konzentrat ein geformter Gegenstand ist, der ein Gewicht von 2-50 g aufweist, wobei der geformte Gegenstand die folgenden Bestandteile umfasst:
a) 35-70 Gew.-% anorganisches Salz;
b) 5-60 Gew.-% Fett, wobei das Fett einen Festfettgehalt bei 20°C (N₂₀) von mindestens 5% aufweist;
d) 0-20 Gew.-% des Glutamat-Bestandteils.

4. Wohlschmeckendes Konzentrat nach Anspruch 2, wobei das Konzentrat ein Granulat ist, das einen Masse-gewichteten mittleren Durchmesser in dem Bereich von 0,1-5 mm aufweist, wobei das Granulat die folgenden Bestandteile umfasst:
a) 35-85 Gew.-% anorganisches Salz;
b) 3-20 Gew.-% Fett;
d) 2-20 Gew.-% des Glutamat-Bestandteils.

5. Wohlschmeckendes Konzentrat nach irgendeinem der vorhergehenden Ansprüche, wobei das anorganische Salz aus Natriumchlorid, Kaliumchlorid und Kombinationen davon ausgewählt ist.

6. Wohlschmeckendes Konzentrat nach irgendeinem der vorhergehenden Ansprüche, wobei das wohlschmeckende Konzentrat 3-20 Gew.-% Stärke-Bestandteil enthält.

7. Wohlschmeckendes Konzentrat nach irgendeinem der vorhergehenden Ansprüche, wobei das Konzentrat 3-11 Gew.-% der Carboxymethylcellulose enthält.

8. Wohlschmeckendes Konzentrat nach irgendeinem der vorhergehenden Ansprüche, wobei die Carboxymethylcellulose ein Molekulargewicht von mindestens 50.000 g/Mol aufweist.

9. Wohlschmeckendes Konzentrat nach irgendeinem der vorhergehenden Ansprüche, wobei die Carboxymethylcellulose einen Substitutionsgrad von nicht mehr als 1,4 aufweist.

10. Verfahren zur Herstellung eines wohlschmeckenden Produktes, ausgewählt aus einer Brühe, einer Bouillon, einer Suppe, einer Soße oder einem Bratensaft, wobei das Verfahren die Zugabe eines wohlschmeckenden Konzentrats nach irgendeinem der vorhergehenden Ansprüche umfasst.

11. Verfahren zur Herstellung eines wohlschmeckenden Konzentrats, wobei das Verfahren umfasst:
• Bereitstellen der Mischung eines wohlschmeckenden Konzentrats, enthaltend:
∘ 22-85 Gew.-% anorganisches Salz;
∘ 2-60 Gew.-% Fett;
∘ 1,8-12 Gew.-% Carboxymethylcellulose;
∘ wahlweise weitere Bestandteile; und
• Überführen der Mischung des wohlschmeckenden Konzentrats in geformte Gegenstände oder in ein Granulat.

12. Verfahren nach Anspruch 11, wobei das Verfahren das Komprimieren der Mischung des wohlschmeckenden Konzentrats zu geformten Gegenständen oder zu einem Granulat umfasst.

13. Verfahren nach Anspruch 11 oder 12, wobei das Verfahren die Einverleibung von Carboxymethylcellulose in der Form eines Pulvers mit einem massegewichteten mittleren Durchmesser von 100-700 µm umfasst.

14. Verfahren nach irgendeinem der Ansprüche 11-13, wobei das Verfahren ein wohlschmeckendes Konzentrat nach irgendeinem der Ansprüche 1-9 ergibt.

## Revendications

1. Concentré de saveur salée comprenant les composants suivants :
a) 22 à 85 % en poids de sel inorganique ;
b) 2 à 60 % en poids de matière grasse ;
c) 1,8 à 12 % en poids de carboxyméthylcellulose ;
d) 0 à 25 % en poids de composant glutamate choisi parmi l'acide glutamique, les sels glutamates comestibles et leurs combinaisons ;
e) 0 à 25 % en poids de composant amidon choisi parmi l'amidon natif, l'amidon pré-gélatinisé, la maltodextrine, l'amidon modifié et leurs combinaisons ;
f) 0 à 20 % en poids d'un sucre choisi parmi les monosaccharides, les disaccharides et leurs combinaisons ;
g) 0 à 45 % en poids d'une matière végétale choisie parmi les légumes, les herbes, les épices et leurs combinaisons ; et
h) 0 à 10 % en poids d'eau ;
dans lequel les composants a) à e) ensemble constituent au moins 55 % en poids du concentré de saveur salée et dans lequel les composants a) à h) ensemble constituent au moins 75 % en poids du concentré de saveur salée.

2. Concentré de saveur salée selon la revendication 1, lequel concentré est un granulat ou un article façonné.

3. Concentré de saveur salée selon la revendication 2, lequel concentré est un article façonné ayant un poids de 2 à 50 g, ledit article façonné comprenant les composants suivants :
a) 35 à 70 % en poids de sel inorganique ;
b) 5 à 60 % en poids de matière grasse, ladite matière grasse ayant une teneur en corps gras solides à 20°C (N₂₀) d'au moins 5 % ;
d) 0 à 20 % en poids du composant glutamate.

4. Concentré de saveur salée selon la revendication 2, lequel concentré est un granulat ayant une granulométrie moyenne pondérée en masse située dans la plage allant de 0,1 à 5 mm, ledit granulat comprenant les composants suivants :
a) 35 à 85 % en poids de sel inorganique ;
b) 3 à 20 % en poids de matière grasse ;
d) 2 à 20 % en poids du composant glutamate.

5. Concentré de saveur salée selon l'une quelconque des revendications précédentes, dans lequel le sel inorganique est choisi parmi le chlorure de sodium, le chlorure de potassium et leurs combinaisons.

6. Concentré de saveur salée selon l'une quelconque des revendications précédentes, lequel concentré de saveur salée contient 3 à 20 % en poids du composant amidon.

7. Concentré de saveur salée selon l'une quelconque des revendications précédentes, lequel concentré contient 3 à 11 % en poids de la carboxyméthylcellulose.

8. Concentré de saveur salée selon l'une quelconque des revendications précédentes, dans lequel la carboxyméthylcellulose a une masse moléculaire d'au moins 50 000 g/mol.

9. Concentré de saveur salée selon l'une quelconque des revendications précédentes, dans lequel la carboxyméthylcellulose a un degré de substitution non supérieur à 1,4.

10. Procédé de préparation d'un produit de saveur salée choisi parmi un potage, un bouillon, une soupe, une sauce et un jus, ledit procédé comprenant l'addition d'un concentré de saveur salée selon l'une quelconque des revendications précédentes.

11. Procédé de préparation d'un concentré de saveur salée, ledit procédé comprenant :
• l'obtention d'un mélange de concentré de saveur salée contenant :
∘ 22 à 85 % en poids de sel inorganique ;
∘ 2 à 60 % en poids de matière grasse ;
∘ 1,8 à 12 % en poids de carboxyméthylcellulose ;
∘ d'autres composants optionnels ; et
• la conversion du mélange de concentré de saveur salée en articles façonnés ou en granules.

12. Procédé selon la revendication 11, lequel procédé comprend la compression du mélange de concentré de saveur salée en articles façonnés ou en granules.

13. Procédé selon la revendication 11 ou 12, lequel procédé comprend l'incorporation de la carboxyméthylcellulose sous la forme d'une poudre ayant une granulométrie moyenne pondérée en masse de 100 à 700 µm.

14. Procédé selon l'une quelconque des revendications 11 à 13, lequel procédé engendre un concentré de saveur salée selon l'une quelconque des revendications 1 à 9.
